Europäisches Patentamt

European Patent Office

Office européen des brevets

(19)

(11) Veröffentlichungsnummer: **0 468 391 A2**

## (12) EUROPÄISCHE PATENTANMELDUNG

(21) Anmeldenummer: **91112213.3**

(22) Anmeldetag: **20.07.91**

(51) Int. Cl.5: **G11B 11/10**

(30) Priorität: **27.07.90 DE 4023884**

(43) Veröffentlichungstag der Anmeldung:
**29.01.92 Patentblatt 92/05**

(84) Benannte Vertragsstaaten:
**DE FR GB IT NL**

(71) Anmelder: **HOECHST AKTIENGESELLSCHAFT**
**Postfach 80 03 20**

**W-6230 Frankfurt am Main 80(DE)**

(72) Erfinder: **Hellstern, Egon, Dr. Dipl.-Physiker**
**Feldbergstrasse 12**
**W-6273 Waldems 3(DE)**
Erfinder: **Hilgers, Horst**
**IM Heimbachtall 46**
**W-6208 Bad Schwalbach 6(DE)**

(54) **Magnetooptisches Aufzeichnungsmedium.**

(57) Ein magnetooptisches Aufzeichnungsmedium 10 umfaßt ein transparentes Substrat 1, zumindest eine dielektrische Schicht 2, eine magnetooptische Aufzeichnungsschicht 3 und eine Reflexionsschicht 4. Zwischen der Reflexionsschicht 4 und der magnetooptischen Aufzeichnungsschicht 3 kann noch eine weitere dielektrische Schicht 5 angeordnet sein. Die Reflexionsschicht 4 besteht aus zumindest zwei metallischen Komponenten A und B, deren Anteile sich über die Dicke der Reflexionsschicht ändern, so daß beispielsweise senkrecht zu der Ebene der Reflexionsschicht ein Konzentrationsgradient einer Komponente B im Bereich von 0 - 10 Atomprozent existiert. Der Anteil der Komponente A an der Innenseite der Reflexionsschicht 4, die der magnetooptischen Aufzeichnungsschicht 3 zugewandt ist, beträgt 100 Atomprozent und kann in Richtung Außenseite der Reflexionsschicht 4 bis auf Null abnehmen. Die Komponente A der Reflexionsschicht 4 ist beispielsweise reines Aluminium, während die Komponente B der Reflexionsschicht 4 aus der Gruppe Zr, Ta, Ti, Cr ausgewählt wird.

FIG.1

Die Erfindung betrifft ein magnetooptisches Aufzeichnungsmedium aus einem transparenten Substrat, zumindest einer dielektrischen Schicht, einer magnetooptischen Aufzeichnungsschicht und einer Reflexionsschicht.

Bei magnetooptischen Aufzeichnungsmedien wird im allgemeinen eine Reflexionsschicht, in der Regel eine Aluminium-, Kupfer-, Gold- oder Silberschicht-, auf eine magnetooptische Aufzeichnungsschicht bzw. eine dielektrische Schicht, die sich auf der magnetooptischen Aufzeichnungsschicht befindet, aufgesputtert. Diese Reflexionsschicht hat zwei wichtige Funktionen zu erfüllen, nämlich einerseits die einfallende Laserstrahlung zum Auslesen der eingezeichneten Information auf die magnetooptische Aufzeichnungs- bzw. Speicherschicht zu reflektieren und dadurch ein erhöhtes Signal durch die zusätzliche Faraday-Drehung in der magnetooptischen Aufzeichnungsschicht zu erhalten. Dabei soll der Reflexionskoeffizient dieser Reflexionsschicht für die benutzte Wellenlänge der Laserstrahlung so groß wie nur möglich sein, da die Signalintensität proportional zu dem Reflexionskoeffizienten der gesamten Aufzeichnungsmediumstruktur ist. Andererseits schützt die Reflexionsschicht die direkt darunter liegende, bzw. noch durch eine dielektrische Schicht getrennte magnetooptische Aufzeichnungsschicht. Insbesondere bei einer Reflexionsschicht aus Aluminium bildet sich an der freien bzw. der Außenseite, auf der ein Schutzlack aufgebracht wird, eine $Al_2O_3$-Schicht, die passivierend wirkt und das Fortschreiten der Korrosion hemmt.

Der Korrosionsschutz der Aluminiumschicht hält allerdings nicht dem Angriff von Chlorionen stand, die beispielsweise in Wasser und Luft in geringen Mengen vorhanden sind. Chlor zersetzt bekannterweise die Aluminiumoxid-Schutzschicht und führt zu charakteristischem Lochfraß in der Aluminiumschicht, wie er aus Korrosionsbildern bekannt ist. Diese Korrosion kann durch Zulegieren eines weiteren Elements zu dem Reflektormaterial Aluminium verlangsamt bzw. verhindert werden. Dieses Material kann u.a. Tantal, Titan, Zirkon, Chrom und dergleichen sein.

So ist aus der Europäischen Patentanmeldung EP-A- 0 296 888 ein magnetooptisches Aufzeichnungsmedium bekannt, das aus einem transparenten Substrat, einer Zwischenschicht, einer magnetooptischen Aufzeichnungsschicht und einer Reflexionsschicht besteht, von denen die letztere Schicht eine Aluminiumlegierung mit einem Zusatz von Tantal enthält. Die magnetooptische Aufzeichnungsschicht befindet sich zwischen der Reflexionsschicht und der Zwischenschicht Das magnetooptische Aufzeichnungsmedium besteht in einer anderen Ausführungsform aus einem transparenten Substrat, einer magnetooptischen Aufzeichnungsschicht, einer Reflexionsschicht und einer organischen Schutzschicht, wobei die Reflexionsschicht zwischen der magnetooptischen Aufzeichnungsschicht und der organischen Schutzschicht angeordnet ist. Die Schutzschicht kann ebenso aus einem Metall- oder nichtmetallischen Oxyd oder einem metallischen oder nichtmetallischen Nitrid bestehen. Unter anderem sind für die Schutzschicht Tantaloxyd oder Siliziumnitrid geeignet. Die Reflexionsschicht kann aus AlTa, AlTi, AlZr, AlPt, AlSi, Al oder Ta bestehen. Durch das Zulegieren dieser Metalle zu dem Aluminium der Reflexionsschicht wird in der Regel die Korrosionsbeständigkeit des Aufzeichnungsmediums leicht erhöht. Ein gravierender Nachteil besteht allerdings darin, daß jedes Zulegieren eines anderen Elements den Reflexions- und Absorptionskoeffizienten von Aluminium und dadurch das Signal-Rauschverhältnis bzw. die Signalstärke des Auslesesignals verringert.

Aus der US- Patentschrift 4,861,671 ist ein magnetooptisches Aufzeichnungsmedium mit einer zweilagigen Schutzschicht bekannt, die aus einer äußeren sauerstoffundurchlässigen Schichtlage und einer inneren Schichtlage besteht, die die magnetooptische Aufzeichnungsschicht schützt. Die äußere Schichtlage ist beispielsweise aus Aluminiumoxyd gebildet, während die innere Schichtlage aus Aluminiumnitrid oder einer sonstigen nichtoxydischen Verbindung besteht. Die Oxyd- und die Nichtoxyd-Schichtlage bilden entweder diskrete Lagen oder können kontinuierlich abgestuft ineinander übergehen. Die abgestufte Schichtlage kann durch reaktives Sputtern von Aluminium in einer Reaktivgasatmosphäre aus Sauerstoff und Stickstoff gebildet werden, wobei während des Sputterns der Durchfluß des reaktiven Gases kontinuierlich von Stickstoff auf Sauerstoff umgestellt wird.

Aus der Literaturstelle Appl. Physics Letter 51 (7) 1987, S. 542-544 sind diskrete duplexe Beschichtungen für den Schutz von magnetooptischen Legierungen gegen Oxidation und Korrosion bekannt. Dabei handelt es sich um einen Duplexbeschichtungsfilm, der aus einem Metall wie beispielsweise Chrom oder Aluminium, das in Luft passiviert wird und aus einer Diffusionsschicht besteht, beispielsweise aus Niob. Der Duplexschutzfilm bietet gegenüber einer diskreten passivierten Metallschutzschicht, die in die magnetooptische Legierung diffundieren kann, eine größere Korrosionsbeständigkeit und einen größeren Schutz gegen Sauerstoff.

Aufgabe der Erfindung ist es, die Reflexionsschicht eines magnetooptischen Aufzeichnungsmediums so zu verbessern, daß die Korrosionsbeständigkeit der magnetooptischen Aufzeichnungsschicht des Aufzeichnungsmediums ohne Verringerung der Signalstärke des Auslesesignals erhöht wird.

Im Rahmen dieser Aufgabe soll auch ein Verfahren zur Herstellung einer derartigen Reflexionsschicht geschaffen werden.

Die Aufgabe der Erfindung wird durch ein magnetooptisches Aufzeichnungsmedium der eingangs beschriebenen Art in der Weise gelöst, daß die Reflexionsschicht aus zumindest zwei metallischen Komponenten A,B besteht, deren variablen Anteile einen Konzentrationsgradienten senkrecht zu der Reflexionsschicht bilden.

In Weiterbildung der Erfindung beträgt der Anteil der Komponente A an der Innenseite der Reflexionsschicht, die der magnetooptischen Aufzeichnungsschicht zugewandt ist, 100 Atomprozent und nimmt in Richtung Außenseite der Reflexionsschicht ab. Dementsprechend nimmt der Anteil der Komponente B mit der Dicke der Reflexionsschicht zu und beträgt an der Außenseite der Reflexionsschicht bis zu 10 Atomprozent.

In Ausgestaltung der Erfindung ist die Komponente A der Reflexionsschicht reines Aluminium und die Komponente B der Reflexionsschicht ein Metall aus der Gruppe Zr, Ta, Ti, Cr.

Das Verfahren zur Herstellung einer Reflexionsschicht eines magnetooptischen Aufzeichnungsmediums durch in-line Sputtern der Bestandteile eines Targets auf eine magnetooptische Aufzeichnungsschicht bzw. auf eine dielektrische Schicht, die auf der magnetooptischen Aufzeichnungsschicht aufgebracht ist, zeichnet sich dadurch aus, daß das magnetooptische Aufzeichnungsmedium während des Sputterns zuerst an einem ersten Abschnitt des Targets vorbei bewegt wird, der aus einer reinmetallischen Komponente A besteht und im Anschluß daran an einem zweiten Abschnitt des Targets vorbeigeführt wird, der aus der Komponente A und zumindest einer weiteren metallischen Komponente B zusammengesetzt ist.

In Weiterführung des Verfahrens nach der Erfindung findet das Sputtern der Komponente A und das gleichzeitige Sputtern der Komponenten A und B auf die magnetooptische Aufzeichnungsschicht bzw. auf die dielektrische Schicht, die auf der magnetooptischen Aufzeichnungsschicht aufgebracht ist, in einer Edelgasatmosphäre statt.

Mit der Erfindung wird der Vorteil erzielt, daß bei sehr geringen Dicken der Reflexionsschicht durch die Ausbildung eines Konzentrationsgradienten der beiden Komponenten A und B senkrecht zu der Ebene der Reflexionsschicht die ausgezeichneten Reflexionseigenschaften der Komponente A, bei der es sich um Aluminium handelt, weitgehend erhalten bleiben, und darüber hinaus die Außenseite der Reflexionsschicht, an der die Legierung aus den beiden Komponenten A und B zu liegen kommt, ihre volle Korrosions- und Oxidationsschutzwirkungen entfalten kann.

Die Erfindung wird nachstehend anhand der Zeichnungen näher erläutert.

Es zeigen:

| | |
|---|---|
| Fig. 1 | einen Schnitt durch ein Aufzeichnungsmedium, bei dem eine Reflexionsschicht direkt auf einer magnetooptischen Aufzeichnungsschicht aufgebracht ist, |
| Fig. 2 | einen Schnitt durch ein Aufzeichnungsmedium, bei dem die Reflexionsschicht auf einer dielektrischen Schicht aufgesputtert ist, die auf der magnetooptischen Aufzeichnungsschicht aufgebracht ist, |
| Fig. 3 | schematisch den Gradientenverlauf einer Komponente B der Reflexionsschicht über der Dicke der Reflexionsschicht, |
| Fig.en 3a bis 3c | Atomprozente von Zirkon (Fig. 3a) und Tantal (Fig. 3b und 3c) über der Dicke der Reflexionsschicht, |
| Fig. 4 | schematisch die Vorbeibewegung von beschichteten Substraten an einem zusammengesetzten Target während des in-line Sputterns der Reflexionsschicht, |
| Fig.en 5a bis 5d | verschiedene Targetkonfigurationen |
| Fig. 6 | das Signal-Rauschverhältnis CNR einer AlZr-Reflexionsschicht die mittels der Targetkonfigurationen gemäß den Fig.en 5a bis 5d gesputtert wurde, |
| Fig.en 6a bis 6h | Signal-Rauschverhältnis CNR über der Schreib-Laserleistung von Reflexionsschichten aus Aluminium und einem Metall aus der Gruppe Zr, Ti, Ta, Cr für den Innen- und Außenradius einer optischen Speicherplatte, |
| Fig.7 | das Reflexionsvermögen von Reflexionsschichten aus Aluminium, Zirkon, Titan oder Tantal, die mittels der Targetkonfigurationen gemäß den Fig.en 5a bis 5d gesputtert wurden, und |
| Fig. 8 | Brechungsindex n und Absorptionskoeffizienten k für Reflexionsschichten aus Aluminium und Zirkon, Titan oder Tantal, die mittels der Targets gemäß den Fig.en 5a bis 5d gesputtert wurden. |

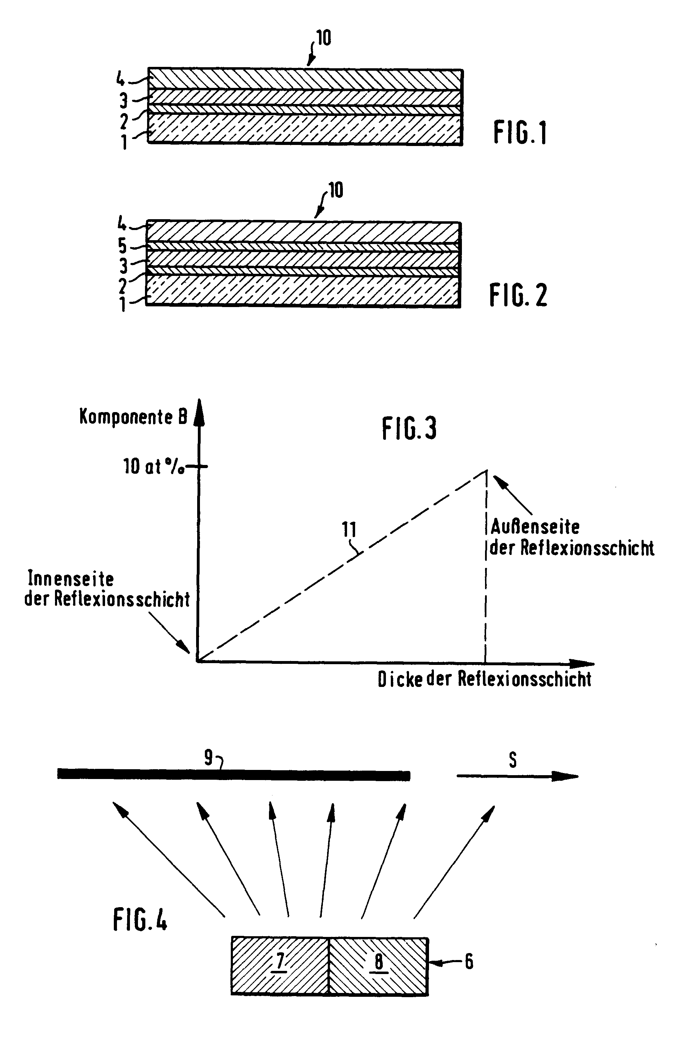

Die schematische Schnittansicht in Figur 1 zeigt ein Aufzeichnungsmedium 10, das aus einem transparenten Substrat 1, einer dielektrischen Schicht 2, einer magnetooptischen Aufzeichnungsschicht 3 und einer Reflexionsschicht 4 besteht.

Eine weitere Ausführungsform des Aufzeichnungsmediums 10 ist im Schnitt in Figur 2 dargestellt. Diese Ausführungsform unterscheidet sich von der Ausführungsform nach Figur 1 nur dadurch, daß zusätzlich zu dem Substrat 1, der dielektrischen Schicht 2, der magnetooptischen Aufzeichnungsschicht 3 eine weitere dielektrische Schicht 5 vorgesehen ist, die zwischen der magnetooptischen Aufzeichnungsschicht 3 und der Reflexionsschicht 4 angeordnet ist.

Das transparente Substrat 1 des Aufzeichnungsmediums 10 besteht aus bekannten Materialien wie beispielsweise Polycarbonat PC, Glas oder Polymethylmethacrylat PMMA. Bei der dielektrischen Schicht 2 bzw. 5 handelt es sich um dünne Schichten aus AlN, $Ta_2O_3$, SiO, SiN, $Si_3N_4$ oder dergleichen. Für die magnetooptische Aufzeichnungsschicht kommen binäre, ternäre, quarternäre oder 5-Komponentenlegierungen aus Seltenerden und Übergangsmetallen in Frage.

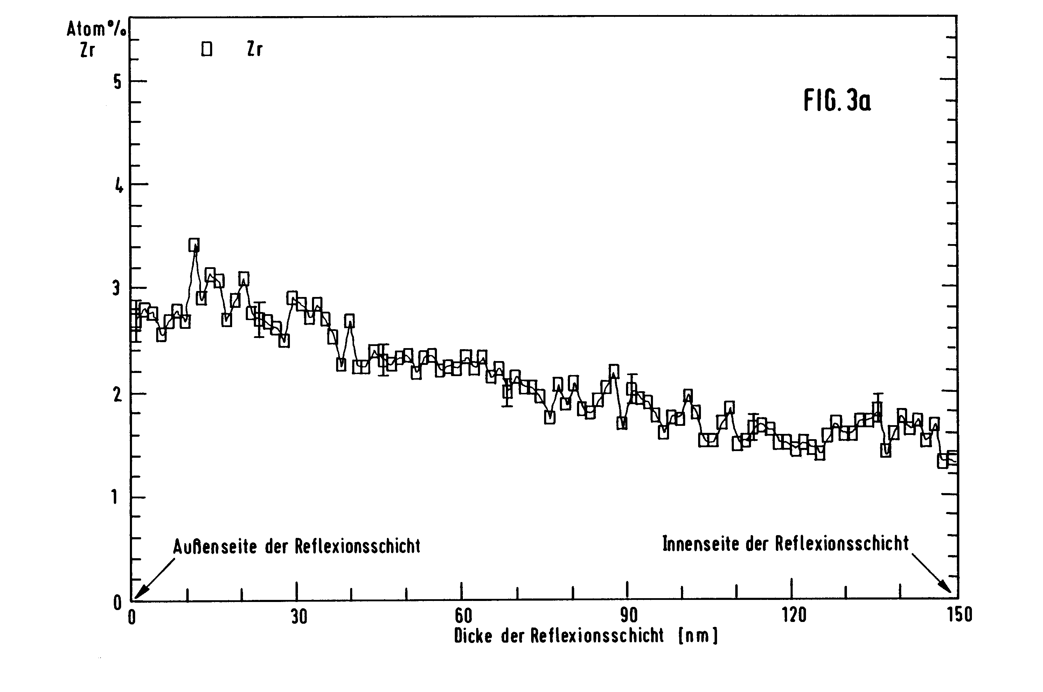

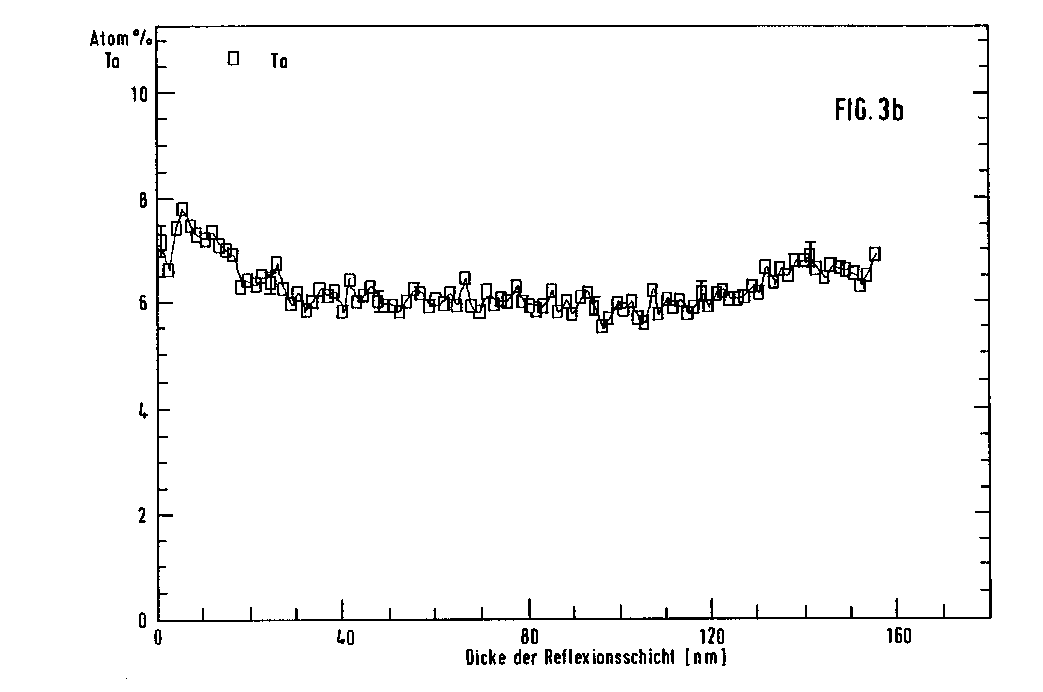

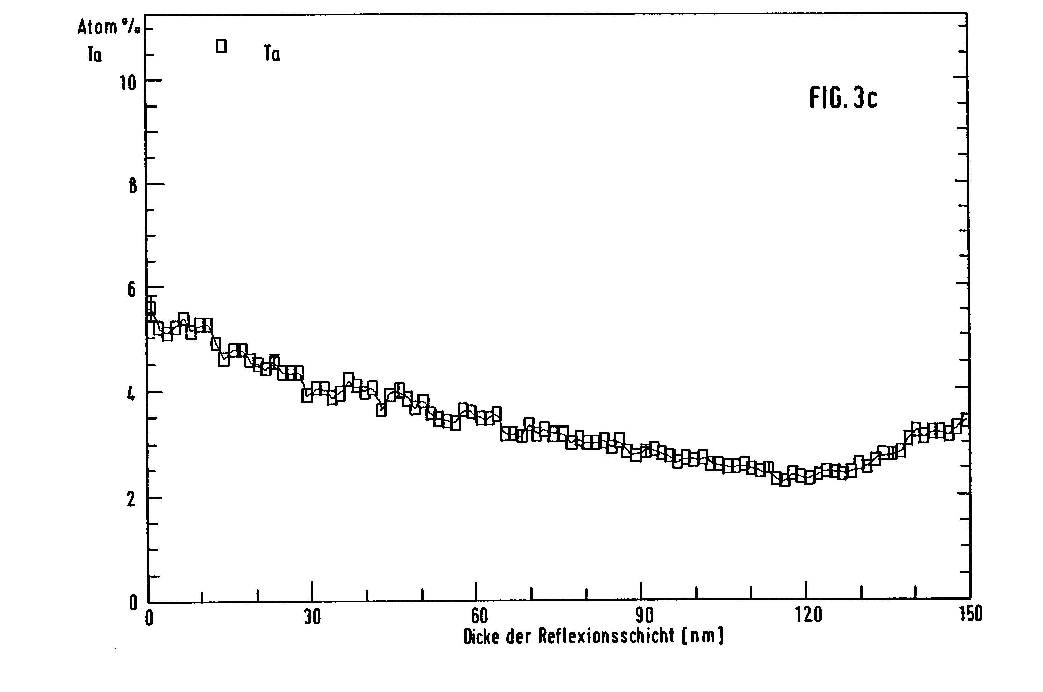

Die Reflexionsschicht 4 besteht aus zumindest zwei metallischen Komponenten A und B, deren Anteile sich über die Dicke der Reflexionsschicht ändern, d.h. die Komponenten A und B weisen Konzentrationsgradienten senkrecht zu der Reflexionsschicht 4 auf, die nachstehend noch näher beschrieben werden wird. Die Komponente A der Reflexionsschicht 4 ist insbesondere reines Aluminium, jedoch kommen hierfür auch Kupfer, Gold, Silber in Frage. Bei der Komponente B der Reflexionsschicht handelt es sich um ein Metall aus der Gruppe Zirkon, Tantal, Titan, Chrom. Der Konzentrationsgradient der Reflexionsschicht 4 liegt in einem Bereich der Atomprozente der Komponenten von A : B von 100 % : 0 % bis 0 % : 100 %. Bevorzugt wird ein Konzentrationsgradient in einem Bereich der Atomprozente der Komponenten von A : B von 100 % : 0 % bis 90 % : 10 % verwendet. Mit anderen Worten bedeutet dies, daß die Komponente A an der Innenseite der Reflexionsschicht 4, die der magnetooptischen Aufzeichnungsschicht 3 bzw. der darauf befindlichen dielektrischen Schicht 5 zugewandt ist, 100 % beträgt und in Richtung der Außenseite der Reflexionsschicht 4 auf 90 % abnimmt, während der Anteil der Komponente B an der Innenseite der Reflexionsschicht 0 % beträgt und an der Außenseite der Reflexionsschicht bis zu 10 % ausmacht. Insbesondere liegt der Konzentrationsgradient der Reflexionsschicht 4 in einem Bereich der Atomprozente der Komponenten von A : B von 100 : 0 bis 95,5 : 4,5 . Dieser Zusammenhang ist schematisch in Figur 3 dargestellt, in welcher der Gradientenverlauf 11 der Komponente B der Reflexionsschicht 4 über der Dicke der Reflexionsschicht gezeigt ist. An der Innenseite der Reflexionsschicht, d.h. im Koordinatenursprung ist der Anteil der Komponente B = 0 Atomprozent, während er an der Außenseite der Reflexionsschicht bis auf 10 Atomprozent ansteigt. Dementsprechend beträgt der Anteil der Komponente A an der Innenseite der Reflexionsschicht, die der magnetooptischen Aufzeichnungsschicht 3 in Figur 1 bzw. der dielektrischen Schicht 5 in Figur 2 zugewandt ist, 100 Atomprozent und nimmt in Richtung Außenseite der Reflexionsschicht 4 auf 90 Atomprozent ab. Dieser Verlauf des Konzentrationsgradienten für die Komponente A ist in Figur 3 nicht dargestellt.

Zu den Komponenten A und B der Reflexionsschicht 4 kann eine weitere Komponente C hinzugefügt werden, bei der es sich gleichfalls um ein Metall aus der Gruppe Zr, Ta, Ti, Cr jedoch unterschiedlich zur Komponente B handeln kann oder um eine nichtmetallische Komponente wie z.B. Kohlenstoff, Silizium, Phosphor, Bor und dergleichen. Die Komponente C weist gleichfalls einen Konzentrationsgradienten senkrecht zur Ebene der Reflexionsschicht 4 auf.

Die magnetooptische Aufzeichnungsschicht 3 aus den Figuren 1 und 2 besteht beispielsweise aus TbCo, TbFe, TbFeCo, GdTbCo, GdTbFe, GdTbFeCo, TbFeCoPt, TbFeCoSe, DyTbFeCO, DyTbFeCoPt, DyTbFeCoSe und ähnlichen Mehrkomponentenlegierungen, wie sie als magnetooptische Aufzeichnungsmaterialien bekannt sind.

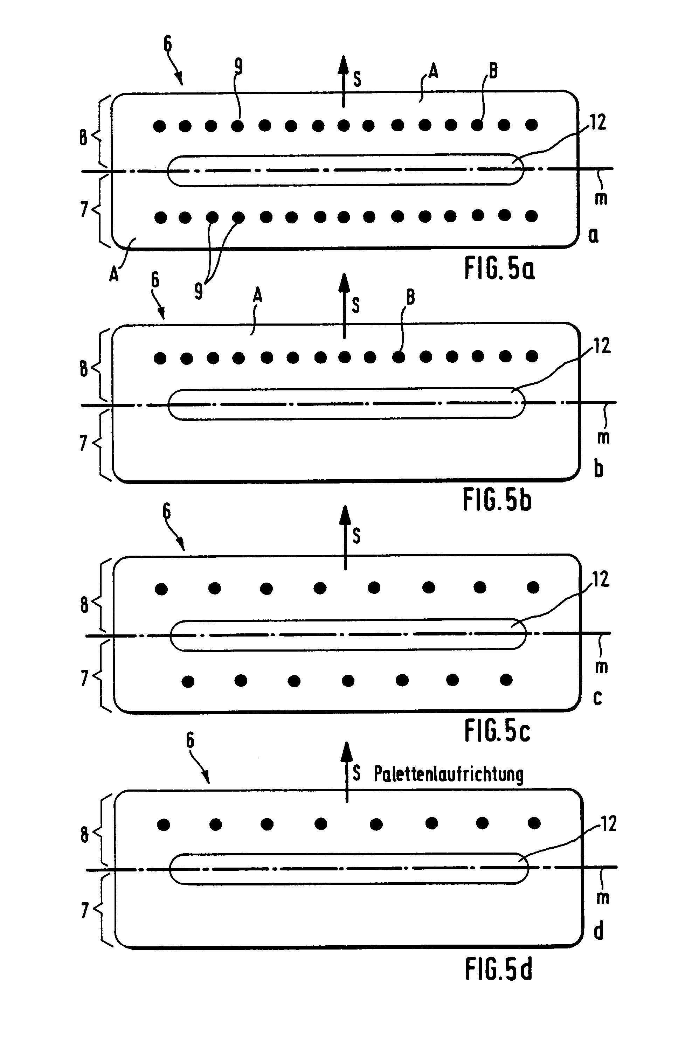

In Figur 3a sind die Atomprozente von Zirkon über der Dicke einer Reflexionsschicht mit dem Hauptbestandteil Aluminium und in den Figuren 3b und 3c die Atomprozente von Tantal über der Dicke einer Reflexionsschicht, deren Hauptbestandteil gleichfalls Aluminium ist, dargestellt. Dabei handelt es sich um sogenannte "Rutherford-Backscattering"-Messungen (RBS) an Reflexionsschichten, die mit unterschiedlichen Targetkonfigurationen a, b und d gesputtert wurden. Diese Targetkonfigurationen werden nachstehend an Hand der Figuren 5a - 5d näher beschrieben. Figur 3a zeigt für eine Reflexionsschicht aus AlZr den Konzentrationsgradienten für Zirkon von der Außenseite der Reflexionsschicht, die sich im Ursprung des Koordinatensystems befindet, in Richtung der Innenseite der Reflexionsschicht, die eine Dicke von etwa 150 nm besitzt. Diese Reflexionsschicht wurde mit einem Target der Konfiguration d gesputtert, das einen unsymmetrischen Aufbau aufweist. Auf der Innenseite der Reflexionsschicht beträgt die Konzentration des Zirkons etwa 1,3 Atomprozent und steigt an der Außenseite der Reflexionsschicht auf einen Wert von 2,8 Atomprozent an. Die RBS-Messung nach Figur 3b erfolgt an einer Reflexionsschicht, die aus AlTa besteht und die mit einem Target der Konfiguration a gesputtert wurde. Diese Targetausführung a besitzt eine symmetrische Verteilung der beiden Komponenten Aluminium und Tantal, so daß sich beim Sputtern über die Dicke der Reflexionsschicht kaum ein Konzentrationsgradient ausbildet. Sowohl an der Innen- als auch an der Außenseite der etwa 150 nm dicken Reflexionsschicht beträgt der Tantalanteil in der Reflexionsschicht etwa 7 Atomprozent. Demgegenüber zeigt die RBS-Messung gemäß Figur 3c einen Konzentrations-

4

gradienten des Tantals in der Reflexionsschicht aus AlTa an. Diese Reflexionsschicht wurde mittels eines Targets der Konfiguration b gemäß Figur 5b gesputtert. Diese Targetkonfiguration b besitzt eine unsymmetrische Anordnung der beiden Komponenten Aluminium und Tantal, wodurch es zu der Ausbildung des Konzentrationsgradienten über die Dicke der Reflexionsschicht kommt. An der Innenseite der Reflexionsschicht beträgt der Anteil des Tantals etwa 3,6 Atomprozent, während er in Richtung Außenseite der Reflexionsschicht auf einen Wert von etwa 5,7 Atomprozent ansteigt.

In Figur 4 ist schematisch der Sputtervorgang von einem Target 6 auf eine Anzahl von zum Teil schon beschichteten, transparenten Substraten zum Aufbringen der Reflexionsschicht dargestellt. Die Substrate sind auf einer Palette 9 angeordnet, die sich in Richtung des Pfeils S an dem zusammengesetzten Target 6 vorbeibewegt. Das Target 6 ist so präpariert, daß es im wesentlichen aus Aluminium besteht, dem zusätzliche Elemente aus der Gruppe Zirkon, Tantal, Titan, Chrom und dgl. zugesetzt sind. Beim inline Sputtern bewegt sich die Palette 9 mit den zu beschichteten Substraten an diesem Target 6 vorbei. Das in Figur 4 im Schnitt gezeigte Target 6 besteht aus einem ersten Abschnitt 7 aus reinem Aluminium und einem zweiten Abschnitt 8, der neben Aluminium eines der Elemente der zuvor angeführten Gruppe von Metallen, wie z.B. Zr, Ta, Te, Cr enthält. Die Palette 9 bewegt sich derart an dem Target 6 vorbei, daß zunächst die Substrate den ersten Abschnitt 7, der nur die Komponente A, nämlich reines Aluminium enthält, überstreichen. Dadurch wird vorab eine reine Aluminiumschicht auf der magnetooptischen Aufzeichnungsschicht bzw. einer dielektrischen Schicht, welche die magnetooptische Aufzeichnungsschicht des Aufzeichnungsmediums abdeckt, abgeschieden. Beim weiteren Vorbeilaufen der Palette 9 bewegen sich die Substrate an dem zweiten Abschnitt 8 des Targets vorbei, wodurch dann die Legierungsschicht aus den Komponenten A und B auf der reinen Aluminiumschicht abgeschieden wird. Die aus den Komponenten A und B bestehende Schicht befindet sich an der Außenseite der Reflexionsschicht, d.h. der Seite, die der Atmosphäre bzw. einer noch aufzubringenden Lackschicht zugewandt ist. Auf diese Weise entsteht ein Konzentrationgradient der Komponenten A und B senkrecht zu der Reflexionsschicht und zwar in der Weise, daß die Schicht aus der reinen Komponente A, nämlich dem Aluminium der magnetooptischen Aufzeichnungsschicht bzw. der dielektrischen Schicht zugewandt ist, die auf der magnetooptischen Aufzeichnungsschicht aufgesputtert ist. Das bedeutet einerseits, daß die sehr guten Reflexionseigenschaften des Aluminiums nächst der magnetooptischen Aufzeichnungsschicht erhalten bleiben und daß andererseits die Legierungsschicht aus den Komponenten Aluminium und einem weiteren Metall an der Außenseite der Reflexionsschicht liegt und dort ihre Schutzwirkung gegen Korrosion und Oxidation voll zur Geltung bringen kann.

Wie schon, erwähnt zeigen die Figuren 5a - 5d verschiedene Targetkonfigurationen a bis d in Draufsicht, zum Herstellen von Reflexionsschichten 4 des Aufzeichnungsmediums. Die beiden Ausführungsformen a und c des Targets 6 sind symmetrisch ausgestaltet, d.h. der erste Abschnitt 7 und der zweite Abschnitt 8 sind gleichartig aufgebaut. Es spielt bei diesen beiden Ausführungsformen keine Rolle, ob die Palette 9, wie in Figur 4 gezeigt, in Richtung des Pfeils S oder in dazu umgekehrter Richtung an den Targets vorbeigeführt wird, in beiden Fällen wird sich nahezu kein Konzentrationsgradient senkrecht zur Reflexionsschicht ausbilden. Wie in den Konfigurationen a und c in den Figuren 5a und 5c dargestellt ist, bestehen die Targets in beiden Abschnitten 7 und 8 jeweils aus einer überwiegenden Komponente A, insbesondere Aluminium, und der in Gestalt von Stopfen 9 in das Target eingesetzten Komponente B, die aus einem Metall der Gruppe Zirkon, Tantal, Titan oder Chrom ausgewählt ist. In diesem Zusammenhang wird darauf verwiesen, daß Chrom nicht in Stangenform vorliegt wie die übrigen Komponenten Zirkon, Titan oder Tantal und als Chips mit dem Grundkörper dieser Targets verbunden wird. Gemäß Figur 5a liegt bei der Targetkonfiguration a eine vollständige Symmetrie bezüglich der Mittellinie m der einzelnen Stopfen 9 der Komponente B vor. Die Mittellinie wird zum größten Teil von einer Blende 12 abgedeckt, um Targetmaterial einzusparen, da in diesem Bereich kein Sputtern stattfindet. Die Targetkonfiguration c nach Figur 5 ist nur in bestimmtem Umfang bezüglich der Mittellinie m symmetrisch ausgebildet, da die Stopfen 9 der Komponente B im ersten Abschnitt 7 gegenüber den Stopfen 9 im zweiten Abschnitt 8 dieser Targets 6 in einer Weise versetzt sind, daß sie jeweils auf Lücke zu zwei benachbarten Stopfen im Abschnitt 8 stehen. Eine weiterer Unterschied gegenüber der Targetkonfiguration a ergibt sich bei der Konfiguration c dadurch, daß die Abstände zwischen benachbarten Stopfen 9 größer als bei der Targetkonfiguration a sind.

Die Targetkonfigurationen b und d gemäß den Figuren 5b und 5d zeigen in bezug auf die jeweiligen Mittlinien m der Targets 6 einen unsymmetrischen Aufbau und entsprechen weitgehend dem in Figur 4 im Querschnitt gezeigten Target 6. Die zu beschichtenden Substrate auf der Palette 9 gemäß Figur 4 erreichen in Palettenlaufrichtung S gesehen zunächst den ersten Abschnitt 7 und überstreichen anschließend den zweiten Abschnitt 8 der Targetkonfiguration b bzw. d. Die ersten Abschnitte 7 dieser beiden Targetkonfigurationen bestehen bis zur Mittellinie m ausschließlich aus der Komponente A, insbesondere aus Aluminium, während die zweiten Abschnitte 8 sowohl die Komponente A als auch die Zulegierungskomponente B enthalten. Der einzige Unterschied zwischen diesen beiden Targetkonfigurationen b und d besteht darin, daß bei der Targetkonfiguration b die Abstände zwischen den Stopfen 9 der Komponente B kleiner sind als bei der Targetkonfiguration d.

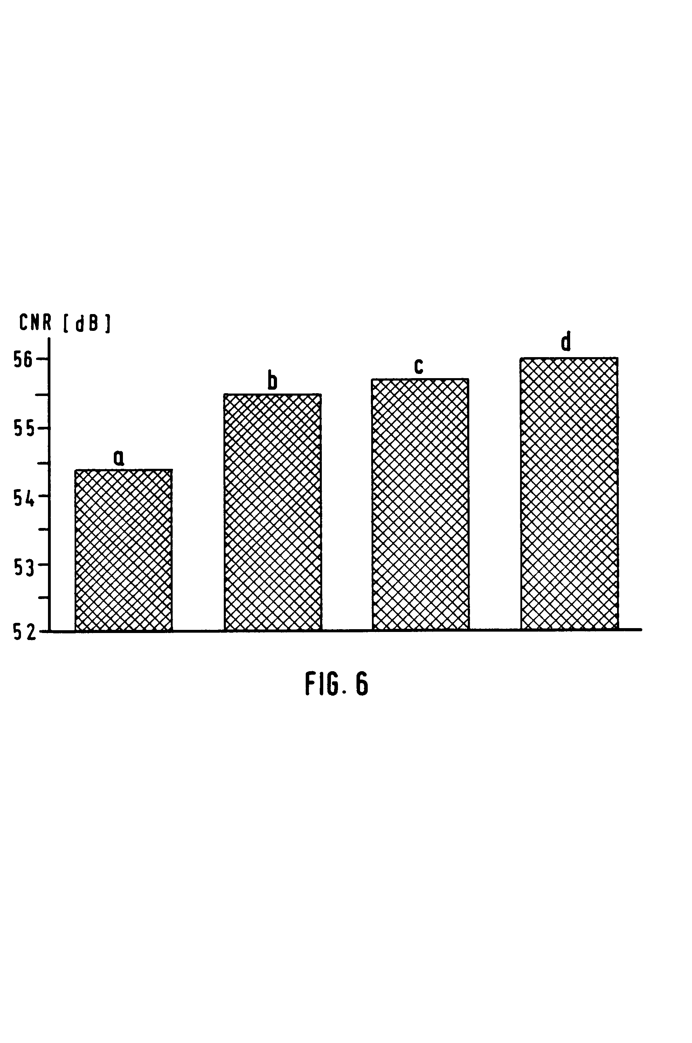

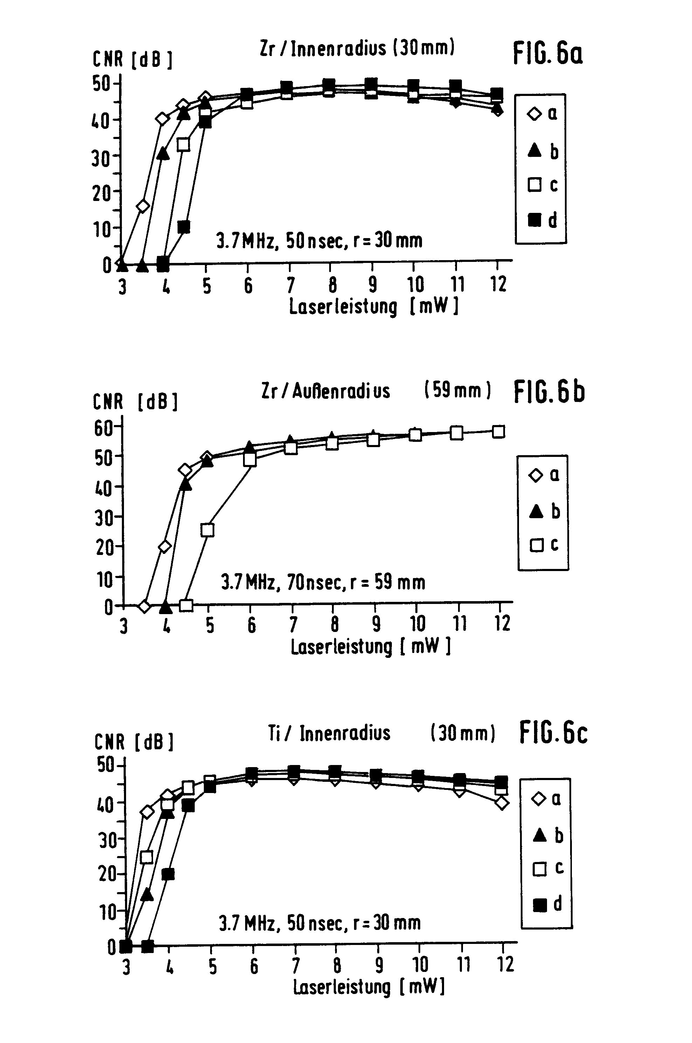

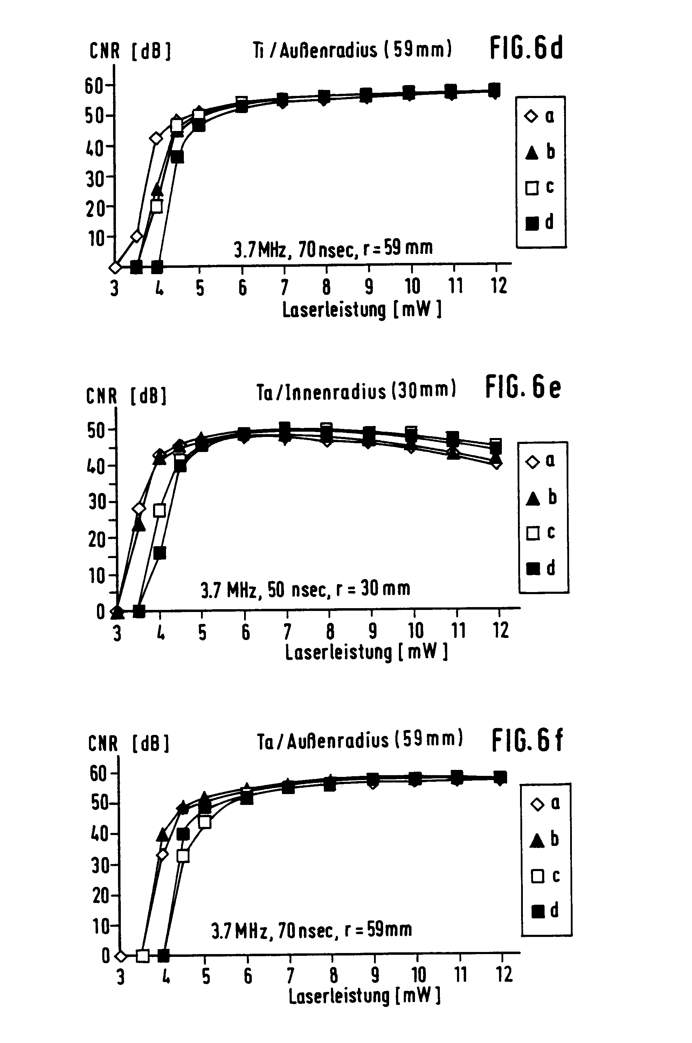

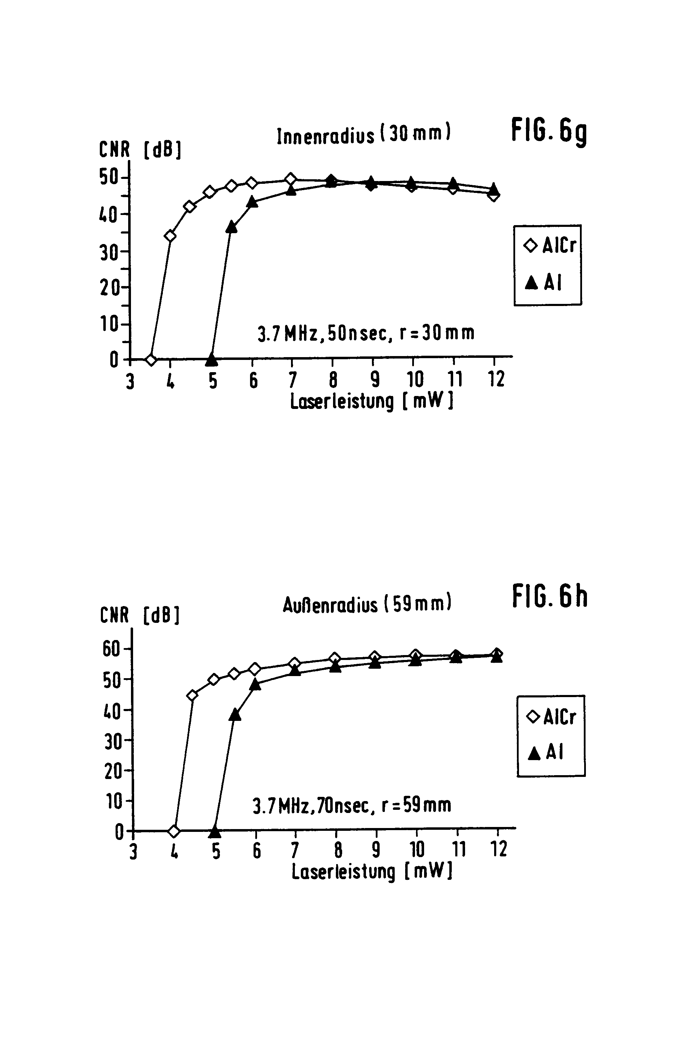

Mit diesen unterschiedlichen Targetkonfigurationen a bis d wurden beispielsweise Aluminium-Zirkon-Reflexionsschichten hergestellt. Das Signal-Rauschverhältnis CNR dieser Reflexionsschichten, die mittels der in den Figuren 5a bis 5d gezeigten Targetkonfigurationen gesputtert wurden, ist in Figur 6 zusammenfassend dargestellt. Hierzu wurden entsprechende Schreib-/Lesetests an den Reflektorschichten vorgenommen und das Signal-Rauschverhältnis jeweils bestimmt. Es zeigt sich dabei, daß die Reflexionsschichten, die mit der Targetkonfiguration a gesputtert wurden, mit circa 54 dB das geringste Signal-Rauschverhältnis haben, während die mit der Targetkonfiguration d hergestellten Reflexionsschichten mit etwa 56 dB das höchste Signal-Rauschverhältnis aufweisen. Diese Messungen wurden bei einer Laser-Schreibleistung von 8 mW, einer Frequenz f = 2,7 MHz, einer Pulsdauer t = 90 ns und bei einem Radius von 35 mm auf dem Aufzeichnungsmedium vorgenommen. Es ist selbstverständlich, daß bei anderen Betriebsdaten des Schreiblasers und einem anders zusammengesetzten Aufzeichnungsmedium auch noch höhere Werte des Signal- Rauschverhältnisses erhalten werden können.

In den Figuren 6a bis 6h sind detaillierte Signal-Rauschverhältnisse CNR [dB] über der Schreib-Laserleistung von Reflexionsschichten aus Aluminium und einem Metall aus der Gruppe Zirkon, Titan, Tantal, Chrom für Speicherplatten mit einem Durchmesser von 5 $\frac{1}{4}$ Zoll dargestellt. Die Schreib-Laserleistung ist in mW angegeben, wobei der Laser mit einer Frequenz von 3,7 MHz und einer Pulsdauer von 50 sec am Innen-, sowie 70 nsec am Außenradius betrieben wurde. Die Messungen wurden jeweils am Innenradius von 30 mm und am Außenradius von 59 mm der Speicherplatte vorgenommen. Die einzelnen Reflexionsschichten wurden mit den Targetkonfigurationen a bis d hergestellt. Deutlich ist zu erkennen, daß die Schwelle der Laserleistung, ab der Schreiben möglich ist, zu einer niedereren Laserleistung verschoben wird, je höher der Anteil der Komponente B in der Reflexionsschicht ist. Bei allen Reflexionsschichten mit Zirkon, Titan, Tantal und Chrom als Komponente B des Targets zeigt sich, daß die mit der Targetkonfiguration a hergestellte Reflexionsschicht empfindlicher als die mit den Targetkonfigurationen b und c erzeugten Reflexionsschichten ist. Diese sind wiederum empfindlicher als die mit der Targetkonfiguration d hergestellte Reflexionsschicht und alle Reflexionsschichten sind empfindlicher als eine reine Aluminium-Reflexionsschicht. Das größte Signal-Rauschverhältnis CNR wird für die Reflexionsschichten erhalten, die mit der Targetkonfiguration d gesputtert wurden. Zu den Figuren 6g und 6 h ist anzumerken, daß ein Target mit den Komponenten Aluminium und Chrom nicht in den Targetkonfigurationen a bis d hergestellt werden konnte, da Chrom nur in Chips-, jedoch nicht in Stangenform gefertigt wird. Insofern wurde das Signal-Rauschverhältnis einer aus Aluminium und Chrom bestehenden Reflexionsschicht gemessen, die mit einem Target aus Aluminium und Chrom gesputtert wurde, das eine von den Targetkonfigurationen a bis d unterschiedliche Konfiguration aufwies. Bei diesem Target handelt es sich um ein Target, bei dem die beiden Komponenten Aluminium und Chrom in einem konstanten Verhältnis zueinander über der gesamten Targetoberfläche vorliegen.

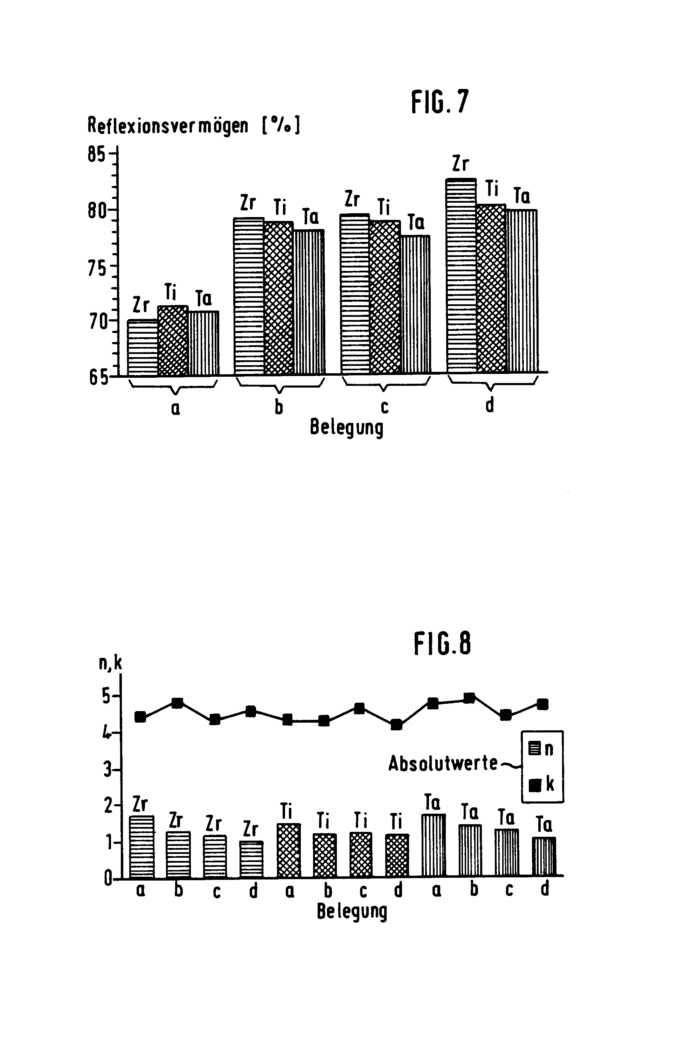

Figur 7 zeigt eine Übersicht über das Reflexionsvermögen von Reflexionsschichten aus Aluminium als Komponente A und Zirkon, Titan oder Tantal als Komponente B. Diese Reflexionsschichten wurden mittels der Targetkonfigurationen a bis d gemäß den Figuren 5a bis 5d gesputtert. Deutlich zu erkennen ist, daß die mit a gekennzeichneten Reflexionsschichten jeweils das geringste Reflexionsvermögen aufweisen, das etwa zwischen 70 - 72 % liegt, während die mit d gekennzeichneten Reflexionsschichten jeweils das höchste Reflexionsvermögen im Bereich von etwa 80 - 86 % besitzen. Die mit a gekennzeichneten Reflexionsschichten sind voll-legierte Reflexionsschichten, d.h. sowohl der erste Abschnitt 7 als auch der zweite Abschnitt 8 des Targets 6 setzt sich jeweils aus den Komponenten A und B in identischer Weise zusammen. Der Konzentrationsgradient in diesen Reflexionsschichten ist nahezu 0, wie schon voranstehend an Hand der Figur 3b erläutert wurde. Die mit d gekennzeichneten Reflexionsschichten sind sogenannte halb-legierte Schichten, d.h. der erste Abschnitt 7 des Targets enthält nur die Komponente A, während der zweite Abschnitt 8 auch noch die Komponente B zusätzlich aufweist, wobei dieser Anteil niedriger als bei den Reflexionsschichten ist, die durch b und c gekennzeichnet sind. Bei den durch d markierten Reflexionsschichten ergibt sich der größte Konzentrationsgradient aller betrachteten Reflexionsschichten und darüber hinaus das höchste Reflexionsvermögen und aufgrund des hohen Legierungsanteils an der Außenseite der Reflexionsschichten eine große Oxidations- und Korrosionsbeständigkeit. In der nachfolgenden Tabelle ist das Reflexionsvermögen verschiedener Reflexionsschichten, die mit den Targetkonfigurationen a bis d gesputtert wurden, numerisch zusammengestellt. Die Komponente A der jeweiligen Target bestand aus Aluminium, während die Komponente B Zirkon, Titan oder Tantal war. Bei den Targetkonfigurationen a und c waren beide Abschnitte 7,8 des jeweiligen Target 6 voll-legiert und der Anteil der Komponente B betrug 9 bzw. 4,5 Atomprozent. Bei den Targetkonfigurationen b und d war jeweils der Abschnitt 7 des Target 6 nicht legiert, während der Abschnitt 8 des Target 6 volllegiert war, wobei der Anteil der Komponente B bis zu 9 bzw. bis zu 4,5 Atomprozent betrug. Dementsprechend ergaben sich Konzentrationsgradienten in den Bereichen 0 - 9 bzw. 0 - 4,5 Atomprozent.

Figur 8 zeigt den Brechungsindex n und den Absorptionskoeffizienten k für verschiedene zusammengesetzte Reflexionsschichten 4, die mit Hilfe von Targetkonfigurationen a bis d gesputtert werden. Es ist deutlich zu erkennen, daß die mit einem Target der Konfiguration d hergestellten Reflexionsschichten im allgemeinen niederere Brechungsindices n aufweisen, die etwa den Wert 1 haben, als die mit der Targetkonfiguration a hergestellten Reflexionsschichten, deren Brechungsindices um den Wert 1,7 liegen. Die Absorptionskoeffizienten k für die verschiedenen zusammengesetzten Reflexionsschichten liegen im Bereich zwischen 4,4 und 4,8, wobei der untere Wert für Zirkon bei Verwendung der Targetkonfiguration c und für Titan bei Einsatz der Targetkonfiguration d auftritt. Der obere Wert von k = 4,8 wird für Zirkon und Tantal jeweils mit der Targetkonfiguration b erhalten.

Die niedrigeren Brechungsindex-Werte sind günstiger, da sie mit einem höheren Reflexionsvermögen und somit einer erhöhten Reflexion der Gesamtschichtstruktur des Aufzeichnungsmediums gekoppelt sind.

**Tabelle:**

| Komponente A | Al | | | Targetkonfigurationen a bis d der zum Sputtern der Reflexionsschichten verwendeten Targets |
|---|---|---|---|---|
| Komponente B | Zr | Ti | Ta | |
| Reflexionsvermögen | 70,1 | 71,4 | 70,8 | a= beide Abschnitte 7,8 des Targets voll legiert, 9 Atom% Komp. B, Konzentrationsgradient ≈ 0 |
| | 79,1 | 78,7 | 78,0 | b= Abschnitt 7 nicht, Abschnitt 8 des Target voll legiert, Komp. B bis zu 9 Atom%, Konzentrationsgradient im Bereich 0-9 Atom% |
| | 79,4 | 78,8 | 77,5 | c= beide Abschnitte 7,8 des Target voll legiert, 4,5 Atom% Komp. B, Konzentrationsgradient ≈ 0 |
| | 82,5 | 80,2 | 80,0 | d= Abschnitt 7 nicht, Abschnitt 8 des Target voll legiert, Komponente B bis zu 4,5 Atom%, Konzentrationgradient im Bereich 0-4,5 Atom% |

## Patentansprüche

1. Magnetooptisches Aufzeichnungsmedium aus einem transparenten Substrat, zumindest einer dielektrischen Schicht, einer magnetooptischen Aufzeichnungsschicht und einer Reflexionsschicht, dadurch gekennzeichnet, daß die Reflexionsschicht (4) aus zumindest zwei metallischen Komponenten A,B besteht, deren variablen Anteile einen Konzentrationsgradienten senkrecht zu der Reflexionsschicht bilden.

2. Magnetooptisches Aufzeichnungsmedium nach Anspruch 1, dadurch gekennzeichnet, daß der Anteil der Komponente A an der Innenseite der Reflexionsschicht (4), die der magnetooptischen Aufzeichnungsschicht (3) zugewandt ist, 100 Atomprozent beträgt und in Richtung Außenseite der Reflexionsschicht (4) abnimmt.

3. Magnetooptisches Aufzeichnungsmedium nach Anspruch 1, dadurch gekennzeichnet, daß der Konzentrationsgradient der Reflexionsschicht (4) in einem Bereich der Atomprozente der Komponenten von A : B = 100 : 0 bis 0 : 100 liegt.

4. Magnetooptisches Aufzeichnungsmedium nach Anspruch 2, dadurch gekennzeichnet, daß der Anteil der Komponente B mit der Dicke der Reflexionsschicht (4) zunimmt und an der Außenseite der Reflexionsschicht bis zu 10 Atomprozent beträgt.

5. Magnetooptisches Aufzeichnungsmedium nach Anspruch 3, dadurch gekennzeichnet, daß der Konzentrationsgradient der Reflexionsschicht (4) in einem Bereich der Atomprozente der Komponenten von A : B = 100 : 0 bis 90 : 10, insbesondere 95,5 : 4,5 liegt.

6. Magnetooptisches Aufzeichnungsmedium nach Anspruch 1, dadurch gekennzeichnet, daß die Komponente A der Reflexionsschicht (4) reines Aluminium, Kupfer, Silber oder Gold ist.

7. Magnetooptisches Aufzeichnungsmedium nach Anspruch 1, dadurch gekennzeichnet, daß die Komponente B der Reflexionsschicht (4) ein Metall aus der Gruppe Zr, Ta, Ti, Cr ist.

8. Magnetooptisches Aufzeichnungsmedium nach Anspruch 1, dadurch gekennzeichnet, daß die Reflexionsschicht (4) neben der Komponente A und B eine weitere Komponente c enthält, die einen Konzentrationsgradienten senkrecht zur Ebene der Reflexionsschicht (4) aufweist, und daß die Komponente C ein Metall aus der Gruppe Zr, Ta, Ti, Cr jedoch unterschiedlich zur Komponente B oder ein Nichtmetall aus der Gruppe C, Si, P, B und dgl. ist.

9. Magnetooptisches Aufzeichnungsmedium nach Anspruch 3, dadurch gekennzeichnet, daß die Reflexionsschicht (4) auf einer magnetooptischen Aufzeichnungsschicht (3) aus GdTbFe, GdTbCo, TbFeCo, TbFeCoPt oder TbFeCoSe aufgebracht ist.

10. Magnetooptisches Aufzeichnungsmedium nach Anspruch 1, dadurch gekennzeichnet, daß die Reflexionsschicht (4) auf einer dielektrischen Schicht (5) aus SiN, $Si_3N_4$, SiO, $SiO_2$, AlN oder $Ta_2O_3$ aufgebracht ist, die die magnetooptische Aufzeichnungsschicht (3) überdeckt.

11. Verfahren zur Herstellung einer Reflexionsschicht eines magnetooptischen Aufzeichnungsmediums durch in-line Sputtern der Bestandteile eines Targets auf eine magnetooptische Aufzeichnungsschicht bzw. auf eine dielektrische Schicht, die auf der magnetooptischen Aufzeichnungsschicht aufgebracht ist, dadurch gekennzeichnet, daß das magnetooptische Aufzeichnungsmedium (10) während des Sputterns zuerst an einem ersten Abschnitt (7) des Targets (6) vorbeibewegt wird, der aus einer rein metallischen Komponente A besteht und im Anschluß daran an einem zweiten Abschnitt (8) des Targets (6) vorbeigeführt wird, der aus der weiteren metallischen Komponente B, bzw. der Komponente A und der Komponente B zusammengesetzt ist.

12. Verfahren nach Anspruch 11, dadurch gekennzeichnet, daß das Sputtern der Komponente A und das gleichzeitige Sputtern der Komponente B bzw. der Komponenten A und B auf die magnetooptische Aufzeichnungsschicht (3) bzw. auf die dielektrische Schicht (5), die auf der magnetooptischen Aufzeichnungsschicht (3) aufgebracht ist, in einer Edelgasatmosphäre stattfindet.

13. Verfahren nach Anspruch 12, dadurch gekennzeichnet, daß der Sputtervorgang das Sputtern von Aluminium, Kupfer, Gold oder Silber als Komponente A der Reflexionsschicht (4) und das gleichzeitige Sputtern von einem dieser Metalle als Komponente A und von einem Metall aus der Gruppe Zr, Ta, Ti, Cr als Komponente B umfaßt.

10

4
3
2
1

**FIG.1**

10

4
5
3
2
1

**FIG. 2**

Komponente B

**FIG.3**

10 at °/o

11

Außenseite
der Reflexionsschicht

Innenseite
der Reflexionsschicht

Dicke der Reflexionsschicht

9

S

**FIG.4**

7    8

6

FIG. 3a

Außenseite der Reflexionsschicht

Innenseite der Reflexionsschicht

Dicke der Reflexionsschicht [nm]

EP 0 468 391 A2

FIG. 3b

EP 0 468 391 A2

FIG. 3c

EP 0 468 391 A2

FIG.5a

FIG.5b

FIG.5c

S Palettenlaufrichtung

FIG.5d

FIG. 6

FIG. 6a

Zr / Innenradius (30 mm)

CNR [dB]

3.7 MHz, 50 nsec, r = 30 mm

Laserleistung [mW]

◇ a
▲ b
□ c
■ d

FIG. 6b

Zr / Außenradius (59 mm)

CNR [dB]

3.7 MHz, 70 nsec, r = 59 mm

Laserleistung [mW]

◇ a
▲ b
□ c

FIG. 6c

Ti / Innenradius (30 mm)

CNR [dB]

3.7 MHz, 50 nsec, r = 30 mm

Laserleistung [mW]

◇ a
▲ b
□ c
■ d

FIG.6d

CNR [dB]  Ti / Außenradius (59mm)

Legend:
◇ a
▲ b
□ c
■ d

3.7 MHz, 70 nsec, r = 59 mm

Laserleistung [mW]

FIG. 6e

CNR [dB]  Ta / Innenradius (30mm)

Legend:
◇ a
▲ b
□ c
■ d

3.7 MHz, 50 nsec, r = 30 mm

Laserleistung [mW]

FIG. 6f

CNR [dB]  Ta / Außenradius (59mm)

Legend:
◇ a
▲ b
□ c
■ d

3.7 MHz, 70 nsec, r = 59mm

Laserleistung [mW]

FIG. 6g

Innenradius (30 mm)

CNR [dB] — Laserleistung [mW]

3.7 MHz, 50 nsec, r = 30 mm

◇ AlCr
▲ Al

FIG. 6h

Außenradius (59 mm)

CNR [dB] — Laserleistung [mW]

3.7 MHz, 70 nsec, r = 59 mm

◇ AlCr
▲ Al

# FIG. 7

Reflexionsvermögen [%]

Belegung

# FIG. 8

n,k

Absolutwerte

▤ n

■ k

Belegung